# EUROPÄISCHE PATENTSCHRIFT

(11) **EP 2 334 988 B1**
(45) Veröffentlichungstag und Bekanntmachung des Hinweises auf die Patenterteilung: **08.06.2016**
(21) Anmeldenummer: 09778563.8
(22) Anmeldetag: 16.09.2009
(51) Int. Cl.: F24C 15/20, B01D 45/08

(54) **DUNSTABZUGSHAUBE**
EXTRACTOR HOOD
HOTTE ASPIRANTE

(30) Priorität: 17.09.2008 DE 102008047595
(43) Veröffentlichungstag der Anmeldung: 22.06.2011
(73) Patentinhaber: Berbel Ablufttechnik GmbH, 48432 Rheine (DE)
(72) Erfinder: WÜBKER, Josef, 81925 München (DE)
(74) Vertreter: Vossius, Corinna
(86) Internationale Anmeldenummer: PCT/EP2009/006703
(87) Internationale Veröffentlichungsnummer: WO 2010/031550

(56) Entgegenhaltungen:
- EP-A- 0 612 962
- EP-A- 0 914 855
- GB-A- 461 180
- JP-A- 2008 064 347

## Beschreibung

### Gebiet der Erfindung

Die vorliegende Erfindung betrifft eine Dunstabzugshaube zum Abscheiden von Schmutzpartikeln und insbesondere Fett- und Öltröpfchen aus einem Luftstrom.

### Hintergrund der Erfindung

Dunstabzugshauben werden insbesondere in Küchen eingesetzt, um über einer Kochstelle bzw. einem Herd entstehende Kochdünste abzusaugen, ggf. zu filtrieren und abzuführen.

Prinzipiell werden Dunstabzugshauben je nach der Art der Luftführung in zwei Gruppen unterschieden. Bei so genannten Ablufthauben wird die Abluft über eine Rohrleitung nach außen geführt, um die Abluft an die Atmosphäre außerhalb des Gebäudes abzugeben, in dem sich die Kochstelle bzw. die Ablufthaube befindet, und dadurch Geruchbelästigungen und Schmutzablagerungen im Kochraum und im Gebäude insgesamt zu vermeiden. Bei so genannten Umlufthauben wird die von der Dunstabzugshaube angesogene Luft durch einen Filter gesäubert und sodann wieder in den Kochraum zurückgeführt.

Herkömmliche Dunstabzugshauben bestehen in der Regel aus einer Abscheidungseinheit, in der die Abscheidung der Schmutzpartikel erfolgt, und einer Lüfter- bzw. Gebläseeinheit zur Abführung der Abluft. Die Abscheidung kann einerseits mittels Abscheidungselementen und/oder einer geeigneten Führung des Luftstroms erfolgen. In der EP 1 502 057 beispielsweise wird eine Dunstabzugshaube beschrieben, bei der mittels einer zweifachen Umlenkung eines Schmutzpartikel enthaltenden Luftstroms bereits ein Großteil der Schmutzpartikel an Prall- bzw. Abscheidungsflächen eines Luftförderkanals abgeschieden wird.

In der JP 2008 064347 A wird eine Dunstabzugshaube zum Abscheiden von Schmutzpartikeln aus einem Luftstrom beschrieben, bei der eine Abscheidungseinheit zur Abscheidung von Schmutzpartikeln aus dem Abluftstrom vorhanden ist, wobei die Abscheidungseinheit ein Prallelement aufweist.

Üblicherweise befindet sich in herkömmlichen Dunstabzugshauben zwischen einer ersten Abscheidungseinheit und einer stromabwärts gelegenen Lüftereinheit ein Filterelement, beispielsweise ein Flusensieb. Ein derartiges Flusensieb besteht aus einem feinmaschigen Gewebe, das nahezu alle in der Abluft enthaltenen restlichen Feststoffanteile bzw. Schmutzpartikel vor dem Eintritt in die Lüftereinheit abfängt. Umso höher die Konzentration von Schmutzpartikeln in dem Abluftstrom ist, desto schneller wird das Flusensieb gesättigt sein bzw. verstopfen und somit keine Filterfunktion mehr erfüllen können. In diesem Fall muss das Flusensieb entnommen und gereinigt bzw. durch ein neues Flusensieb ersetzt werden. Ferner ist zu berücksichtigen, dass das Flusensieb einen Widerstand im Strömungssystem darstellt, was im Vergleich zu einer Dunstabzugshaube ohne Flusensieb zu einer größeren Beanspruchung der Lüftereinheit führt, d.h. die Lüftereinheit muss eine größere Druckdifferenz herstellen. Eine größere Beanspruchung der Lüftereinheit führt unweigerlich zu ausgeprägteren Betriebsgeräuschen, die als sehr störend empfunden werden können.

Die Aufgabe der vorliegenden Erfindung besteht darin, eine Dunstabzugshaube zu schaffen, die die vorgenannten Nachteile nicht aufweist.

### Zusammenfassung der Erfindung

Die Aufgabe wird durch eine Dunstabzugshaube gemäß Anspruch 1 gelöst. Die Dunstabzugshaube umfasst eine Lüftereinheit zur Erzeugung eines Abluftstroms durch die Dunstabzugshaube und eine Abscheidungseinheit zur Abscheidung von Schmutzpartikeln aus dem Abluftstrom. Die Abscheidungseinheit definiert wenigstens einen Lüftführungskanal, in dem der Abluftstrom eine mehrmalige Umlenkung der Strömungsrichtung erfährt. Dabei ist wesentlich, dass entlang des wenigstens einen Luftführungskanal ein Prallelement angeordnet ist, das zumindest bereichweise Kapillarlöcher aufweist, so dass aus dem entlang des wenigstens einen Luftführungskanals geführten Abluftstrom Schmutzpartikel über die Kapillarlöcher abgeschieden werden und das Prallelement in dem wenigstens einen Luftführungskanel derart stromabwarts von einer Umlenkung des Ablenkungsstroms angeordnet ist, dass Schmutzpartikel aufgrund von Fliehkräften auf dem Prallelement abgeschieden werden und das Prallelement in dem wenigstens einen Luftführungskanel derart stromabwarts von einer Umlenkung des Ablenkungsstroms angeordnet ist, dass Schmutzpartikel aufgrund von Fliehkräften auf dem Prallelement abgeschieden werden..

Die Kapillarlöcher weisen eine Größe auf, die es ermöglicht, dass auf der Prallfläche abgeschiedene Schmutzpartikel aufgrund des Kapillareffekts von der Oberfläche der Prallfläche weg transportiert werden. Diese Schmutzpartikel sind nicht mehr dem auf die Prallfläche auftreffenden Abluftstrom ausgesetzt und können somit nicht wieder vom Abluftstrom mitgerissen werden. Ferner sollte die Größe der Kapillarlöcher derart gewählt sein, dass der Luftstrom nicht bedeutend durch die Prallfläche hindurch treten kann. Vorzugsweise liegt der Durchmesser der Kapillarlöcher in einem Bereich von 0,5 bis 5 mm, weiter bevorzugt in einem Bereich von 1 bis 3 mm.

Gemäß einer weiteren bevorzugten Ausführungsform ist die Abscheidungseinheit mit zwei Abluftführungskanälen spiegelsymmetrisch zu einer Mittelachse der Dunstabzugshaube ausgebildet, wobei die jeweils in den Abluftführungskanälen angeordneten, zumindest bereichsweise mit Kapillarlöchern versehenen Prallflächen gegenüberliegende, und über einen gebogenen Verbindungsabschnitt mit einander verbundene Seiten des Prallelements sind.

Weitere Vorteile der Erfindung und bevorzugte Ausgestaltungen ergeben sich aus der nachfolgenden gegenständlichen Beschreibung, den Merkinalen der Unteransprüche und den Zeichnungen.

### Kurze Beschreibung der Zeichnungen

Eine bevorzugte Ausführungsform der Erfindung ist in den beigefügten Zeichnungen dargestellt.
Figuren 1a und 1b zeigen eine Vorderansicht sowie eine Querschnittsansicht entlang der Linie A-A einer erfindungsgemäßen Dunstabzugshaube.
Figuren 2a und 2b zeigen die Figuren 1a und 1b in teilweiser Explosionsdarstellung.
Figur 3 zeigt eine perspektivische Ansicht der erfindungsgemäßen Dunstabzugshaube in teilweiser Explosionsdarstellung.
Figur 4 zeigt im Detail Teile der Abscheidungseinheit der erfindungsgemäßen Dunstabzugshaube im Querschnitt.
Figuren 5a und 5b zeigen im Detail Teile der Abscheidungseinheit der erfindungsgemäßen Dunstabzugshaube in einer perspektivischen Darstellung.

### Detaillierte Beschreibung einer bevorzugten Ausführungsform

Die Erfindung soll nun anhand einer bevorzugten Ausführungsform näher erläutert werden.

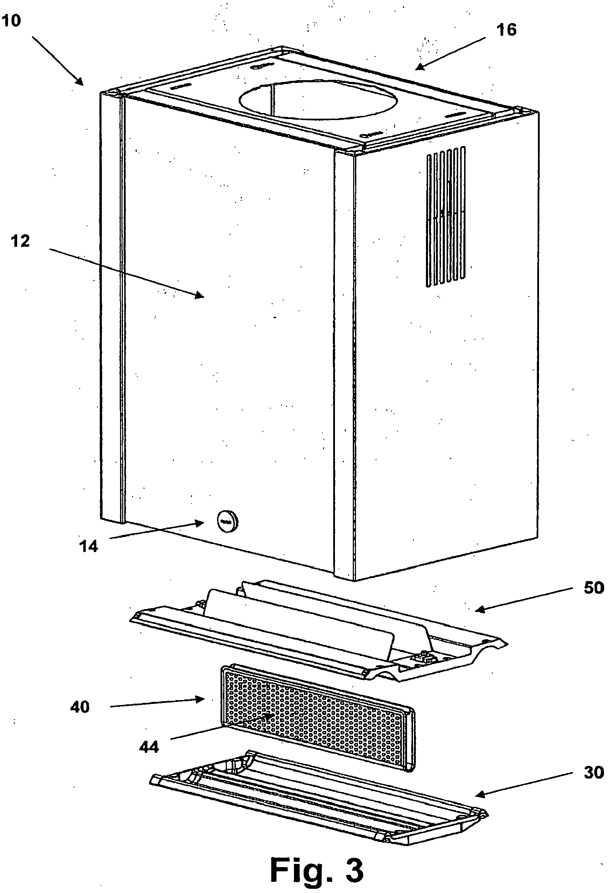

In den beigefügten Figuren sind eine Dunstabzugshaube 10 sowie erfin dungsgemäße Komponenten dieser Dunstabzugshaube 10 dargestellt. Die Dunstabzugshaube 10 weist ein im Wesentlichen hohlquader- bzw. schachtförmiges Gehäuse auf. Beispielhafte Dimensionen des Gehäuses sind: Breite 60 cm, Tiefe 40 cm und Höhe 80 cm. Das Gehäuse besteht im Wesentlichen aus einem mit Edelstahlblechen verkleideten Rahmen. An der Vorderseite 12 dieses Gehäuses ist ein abnehmbarer Bedienknopf 14 angebracht, der mit einer Steuereinheit (nicht dargestellt) in Verbindung steht und so die Steuerung der Dunstabzugshaube 10 und insbesondere einer Lüftereinheit bzw. eines Gebläses 18 erlaubt. Wie sich dies Figur 3 entnehmen lässt, weist die Dunstabzugshaube 10 gemäß der hier beschriebenen bevorzugten Ausführungsform ferner eine geeignete Ausgestaltung des oberen Endes 16 davon auf, die es ermöglicht, die Dunstabzugshaube 10 an einer Raumdecke über einer Kochstelle zu befestigen, und das mit einer kreisförmigen Öffnung für den Anschluss an ein Abluftrohr versehen ist. Obgleich die hier beschriebene Dunstabzugshaube 10 für die Verwendung als Ablufthaube ausgestaltet ist, wird der Fachmann ohne weiteres erkennen, dass eine erfindungsgemäße Dunstabzugshaube ebenso im Umluftbetrieb verwendet werden kann. Selbstverständlich kann die erfindungsgemäße Dunstabzugshaube 10 auch an einer Wand statt an einer Decke angebracht werden.

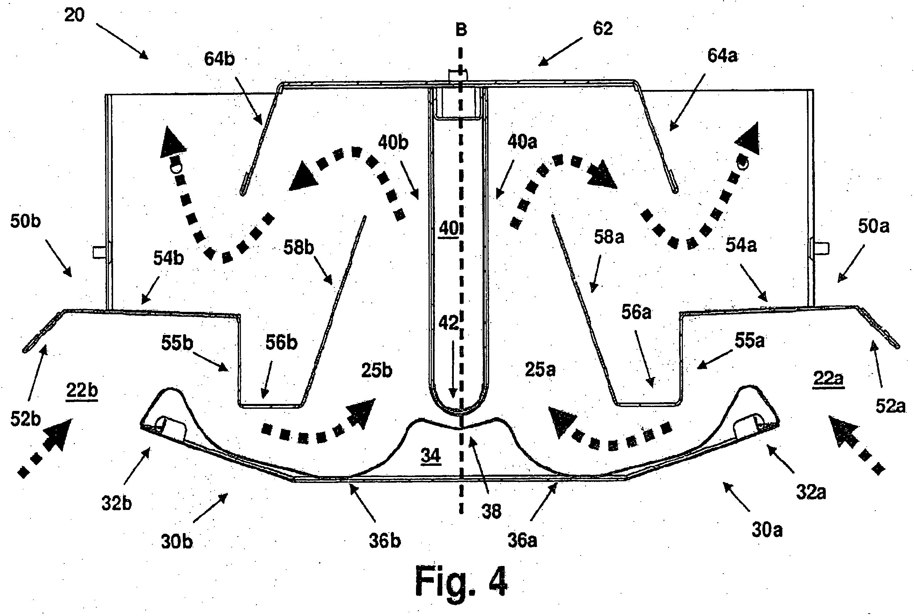

Innerhalb des Gehäuses der Dunstabzugshaube 10 sind die Lüftereinheit 18 und eine Abscheidungseinheit 20 montiert. Wie dies nachstehend detaillierter beschrieben wird, werden im Betrieb der Dunstabzugshaube 10 mittels der Lüftereinheit 18 zwei in Figur 4 mit punktierten Pfeilen schematisch gekennzeichnete Abluftströme unterhalten, die über zwei durch die Abscheidungseinheit 20 ausgebildete, längs verlaufende Lufteinlassöffnungen, nämlich die vordere Lufteinlassöffnung 22a und die hintere Lufteinlassöffnung 22b, am unteren Ende der Dunstabzugshaube 10 in die Abscheidungseinheit 20 eintreten, entlang zweier spiegelsymmetrischer Lüftführungskanäle, nämlich dem vorderen Luftführungskanal 25a und dem hinteren Luftführungskanal 25b, der Abscheidungseinheit 20 durch die Dunstabzugshaube 10 geführt werden und am oberen Ende 16 der Dunstabzugshaube 10 aus dieser wieder heraustreten. Die Abscheidungseinheit 20 ist so ausgestaltet, dass innerhalb von dieser die jeweiligen Luftströme einer mehrmaligen Richtungsänderung unterworfen werden, so dass in den Luftströmen vorhandene Schmutzpartikel, wie beispielsweise Fett- oder Öltröpfchen, im Wesentlichen an von der Abscheidungseinheit 20 ausgebildeten Prall- bzw. Abscheidungsflächen abgeschieden werden. Das Prinzip einer wenigstens zweifachen Umlenkung des Luftstroms in einer Abscheidungseinheit ist aus der bereits vorstehend erwähnten EP 1 502 057 bekannt.

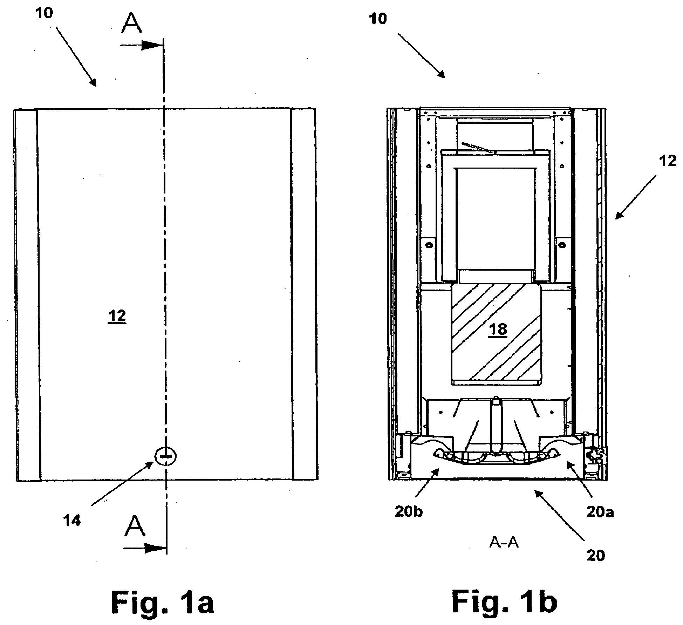

Die vorstehend erwähnte mehrfache Umlenkung bzw. Richtungsänderung der Luftströme in der Abscheidungseinheit 20 der Dunstabzugshaube 10 wird im Wesentlichen durch die Form und die relative Anordnung eines Bodenelements 30, eines Prallelements 40, eines Zentralelements 50 und eines Deckenelements 60 erreicht, die Bestandteile der Abscheidungseinheit 20 sind. Wie sich dies insbesondere den Figuren 1b und 4 entnehmen lässt, ist der Aufbau dieser Elemente 30, 40, 50 und 60 und somit auch der aus diesen Elementen zusammengesetzten Abscheidungseinheit 20 im Wesentlichen symmetrisch hinsichtlich einer Mittelebene der Dunstabzugshaube 10, die parallel zu der Vorderseite 12 verläuft und im Schnitt von Figur 4 als Symmetrieachse B gestrichelt gekennzeichnet ist. Mit anderen Worten: der Verlauf des durch einen vorderen Abschnitt 20a der Abscheidungseinheit 20 definierten Luftführungskanal 25a von der vorderen Lufteinlassöffnung 22a zu der Lüftereinheit 18 entspricht dem Verlauf des durch einen hinteren Abschnitt 20b der Abscheidungseinheit 20 definierten Luftführungskanals 25b von der hinteren Lufteinlassöffnung 22b zu der Lüftereinheit 18. Anhand der nachstehenden Beschreibung wird der Fachmann jedoch erkennen, dass die Erfindung prinzipiell ebenso in einer Dunstabzugshaube verwirklicht werden kann, die nur eine Lufteinlassöffnung aufweist und deren Abscheidungseinheit nur einen Luftführungskanal zwischen dieser Lufteinlassöffnung und einer Lüftereinheit definiert. Nachstehend werden die Bestandteile des vorderen Abschnitts 20a der Abscheidungseinheit 20 bzw der Elemente 30, 40, 50 und 60 mit dem zusätzlichen Buchstaben a gekennzeichnet, während die Abschnitte des hinteren Abschnitts der Abscheidungseinheit 20 bzw. der Elemente 30, 40, 50 und 60 mit dem zusätzlichen Buchstaben b gekennzeichnet werden.

Wie bereits erwähnt, besteht die Abscheidungseinheit 20 im Wesentlichen aus dem Bodenelement 30, dem Prallelement 40, dem Zentralelement 50 und dem Deckenelement 60. Wie sich dies insbesondere der Schnittdarstellung von Figur 4 entnehmen lässt, weist das Bodenelement 30 die Form einer länglichen Schale auf mit verdickten, nach oben abstehenden und längs verlaufenden vorderen und hinteren Außenrändern 32a, 32b sowie einem ebenfalls nach oben abstehenden längs verlaufenden Zentralbereich 34. Das Bodenelement 30 ist so geformt, dass zwischen den Außenrändern 32a, 32b und dem Zentralbereich 34 ein vorderer 36a und hinterer 36b wannenförmiger Abschnitt ausgebildet wird. Der Zentralbereich 34 weist entlang der Mittelachse B eine V-förmig zulaufende Vertiefung 38 auf, die im Wesentlichen komplementär zu einem unteren Ende 42 des Prallelements 40 ausgestaltet ist, wie dies nachstehend detaillierter beschrieben wird.

Der vordere Abschnitt 50a und der hintere Abschnitt 50b des Zentralelements 50 sind jeweils so ausgestaltet und so relativ zu dem Bodenelement 30 angeordnet, dass der vordere Abschnitt 50a des Zentralelements 50 und der vordere Abschnitt 30a des Bodenelements 30 zusammen einen ersten Abschnitt des vorderen Luftführungskanals 25a definieren und dass der hintere Abschnitt 50b des Zentralelements 50 und der hintere Abschnitt 30b des Bodenelements 30 zusammen einen ersten Abschnitt des hinteren Luftführungskanals 25b definieren. Wie sich dies insbesondere der Schnittdarstellung von Figur 4 entnehmen lässt, kann es sich hierzu bei dem vorderen 50a und dem hinteren 50b Abschnitt des Zentralelements 50 jeweils um ein geeignet gebogenes Metallblech handeln. Beispielsweise weist der vordere Abschnitt 50a des Zentralelements 50 einen ca. 45 Grad gegenüber der Horizontalen nach oben verlaufenden ersten ebenen Abschnitt 52a auf, einen sich daran anschließenden leicht gegenüber der Horizontalen nach unten verlaufenden zweiten ebenen Abschnitt 54a, einen sich daran anschließenden im Wesentlichen senkrecht nach unten verlaufenden dritten ebenen Abschnitt 55a, einen sich daran anschließenden im wesentlichen horizontal verlaufenden vierten ebenen Abschnitt 56a sowie einen sich daran anschließenden vorzugsweise in einem Winkel von ca. 70 Grad gegenüber der Horizontalen nach oben verlaufenden fünften ebenen Abschnitt 58a. Der zu dem vorderen Abschnitt 50a des Zentralelements 50 symmetrische hintere Abschnitt 50b weist einen ebensolchen ersten 52b, zweiten 54b, dritten 55b, vierten 56b und fünften 58b Abschnitt auf.

Die Form der jeweiligen ersten Abschnitte der Luftförderkanale 25a, 25b, die durch die Form und die relative Anordnung des Bodenelements 30 und des Zentralelements 50 definiert werden, lässt sich am besten der Querschnittsdarstellung von Figur 4 entnehmen. Im Betrieb der Dunstabzugshaube 10 tritt von einer Kochstelle aufsteigende, Schmutzpartikel enthaltende Abluft beispielsweise über die vordere Lufteinlassöffnung 22a, die im Wesentlichen von dem ca. 45 Grad gegenüber der Horizontalen nach oben verlaufenden ersten ebenen Abschnitt 52a des vorderen Abschnitts 50a des Zentralelements 50 und dem verdickten, nach oben abstehenden Außenrand 32a des vorderen Abschnitts 30a des Bodenelements 30 definiert wird, in den vorderen Bereich 20a der Abscheidungseinheit 20 ein. Die in die Lufteinlassöffnung 22a eintretende Abluft erfährt eine erste Umlenkung bzw. Änderung der Strömungsrichtung zwischen dem verdickten, nach oben abstehenden Außenrand 32a des vorderen Abschnitts 30a des Bodenelements 30 und dem leicht gegenüber der Horizontalen nach unten verlaufenden zweiten ebenen Abschnitt 54a und dem sich daran anschließenden im Wesentlichen senkrecht nach unten verlaufenden dritten ebenen Abschnitt 55a des vorderen Abschnitts 50a des Zentralelements 50, da der Luftstrom dem hier nach unten gekrümmten Luftförderkanal 25a folgen muss. Aufgrund dieser ersten Umlenkung des Luftstroms sammelt sich ein Großteil der Schmutzpartikel, wie beispielsweise Fett- oder Öltröpfchen, insbesondere an dem im Wesentlichen senkrecht nach unten verlaufenden dritten ebenen Abschnitt 55a des vorderen Abschnitts 50a des Zentralelements 50. Eine derartige erste Umlenkung ist prinzipiell aus der EP 1 502 057 bekannt.

Nach der vorstehend beschriebenen ersten Umlenkung erfährt die durch den vorderen Abschnitt 20a der Abscheidungseinheit 20 strömende Abluft eine weitere Umlenkung aufgrund der Form des weiteren Verlaufs des Luftförderkanals 25a, der im Wesentlichen durch den vorderen wannenförmigen Abschnitt 36a des Bodenelements 30 in den im Wesentlichen horizontal verlaufenden vierten ebenen Abschnitt 56a des Zentralelements 50 definiert ist. Aufgrund der Aufweitung des Luftförderkanals 25a in diesem Bereich erfährt der Luftstrom ferner eine Verlangsamung. Wiederum wird sich jedoch ein Teil der nach der ersten Umlenkung noch im Abluftstrom vorhandenen Schmutzpartikel, wie beilspielsweise Fett- oder Öltröpfchen, in dem vorderen wannenförmigen Abschnitt 36a des Bodenelements 30 abscheiden, und zwar insbesondere in dem Teil des vorderen wannenförmigen Abschnitts 36a, der an den Zentralbereich 34 des Bodenelements 30 angrenzt.

Wie sich dies dem Querschnitt von Figur 4 entnehmen lässt, wird der weiter stromabwärts gelegene Teil des Luftförderkanals 25a durch den vorzugsweise in einem Winkel von ca. 70 Grad gegenüber der Horizontalen nach oben verlaufenden fünften ebenen Abschnitt 58a des vorderen Abschnitt 50a des Zentralelements 50 und einen vorderen Abschnitt 40a des Prallelements 40 ausgebildet. Das Prallelement 40 gemäß der hier beschriebenen bevorzugten Ausführungsform weist im Querschnitt von Figur 4 im Wesentlichen eine U-förmige Ausgestaltung mit einem ebenen vorderen Abschnitt 40a, einem gebogenen Verbindungsabschnitt 42, der das untere Ende des Prallelements 40 ausbildet, sowie einem ebenen hinteren Abschnitt 40b auf. Beispielsweise kann es sich bei dem Prallelement 40 um ein geeignet gebogenes und angeordnetes Metallblech handeln. Dabei ist der gebogene Verbindungsabschnitt 42 derart ausgestaltet, dass dessen Form, wie in Figur 4 dargestellt, komplementär zu der Vertiefung 38 im Zentralbereich 34 des Bodenelements 30 ist, und derart angeordnet, dass der vordere wannenförmige Abschnitt 36a des Bodenelements 30 praktisch in den vorderen Abschnitt 40a des Prallelements 40 übergeht. Mit anderen Worten: für den Abluftstrom bilden der vordere wahnenförmige Abschnitt 36a des Bodenelements 30 und der vordere Abschnitt 40a des Prallelements 40 praktisch eine kontinuierliche Fläche.

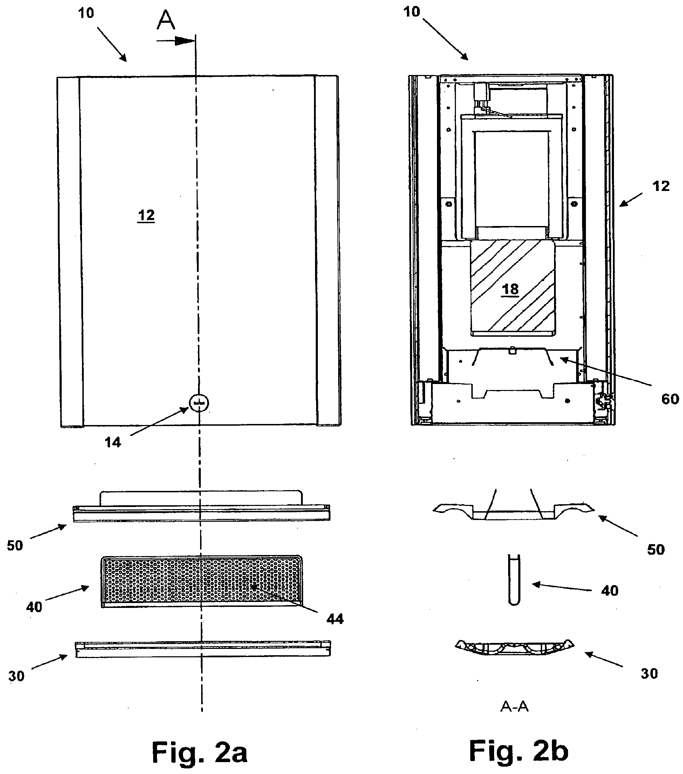

Wie sich dies insbesondere den Figuren 2a und 3 entnehmen lässt, sind sowohl der vordere Abschnitt 40a als auch der hintere Abschnitt 40b des Prallelements mit einer Vielzahl von Kapillarlöchern 44 versehen. Diese Kapillarlöcher 44 sind derart ausgestaltet, dass noch im Abluftstrom vorhandenen Schmutzpartikel, wie beispielsweise Fett- oder Öltröpfchen, die auf den vorderen Abschnitt 40a bzw. den hinteren Abschnitt 40b des Prallelements 40 auftreffen und daran haften bleiben, aufgrund des Kapillareffekts und aufgrund der kontinuierlichen Beaufschlagung mit einem Luftstrom auf die jeweiligen Innenseiten des vorderen 40a bzw. des hinteren 40b Abschnitts des Prallelements 40 abgeführt werden. Dort sind die derart abgeführten Schmutzpartikel nicht mehr den durch die jeweiligen Luftführungskanale 25a, 25b strömenden Abluftströmen ausgesetzt und können folglich nicht mehr von diesen wieder mitgerissen werden. Die Kapillarlöcher weisen vorzugsweise einen Durchmesser in einem Bereich von 0,5 bis 5 mm, weiter bevorzugt von 1 bis 3 mm auf. Die auf die jeweiligen Innenseiten des vorderen 40a bzw. des hinteren 40b Abschnitts des Prallelements 40 abgeführten Schmutzpartikel, insbesondere Fett- oder Öltröpfchen, fließen aufgrund der Schwerkraft an den Innenseiten des vorderen 40a bzw. des hinteren Abschnitts 40b des Prallelements 40 nach unten ab und sammeln sich im Bereich des Verbindungsabschnitts 42 des Prallelements 40. Dieser Verbindungsabschnitt 42 des Prallelements 40 kann als solide Wanne ausgestaltet sein, ebenfalls mit einer Vielzahl von Kapillarlöchern versehen sein oder eine andere Struktur aufweisen, die es ermöglicht, dass die sich auf der Innenseite des Verbindungsabschnitts 42 ansammelnden Schmutzpartikel auf die durch den Zentralbereich 34 des Bodenelements 40 definierte V-förmig zulaufende Vertiefung 38 abtropfen bzw. abfließen können, wie beispielsweise ein longitudinaler Schlitz.

Nach den vorstehend beschriebenen Abscheidungen von im Luftstrom enthaltenen Schmutzpartikeln insbesondere an den jeweils im Wesentlichen senkrecht nach unten verlaufenden dritten ebenen Abschnitten 55a, 55b des vorderen 50a bzw. des hinteren 50b Abschnitts des Zentralelements 50, an dem vorderen 36a bzw. hinteren 36b wannenförmigen Abschnitt des Bodenelements 30 und dem vorderen 40a bzw. hinteren 40b Abschnitt des Prallelements 40 sind die jeweils durch die Luftführungskanale 25a, 25b strömenden Luftströme im Wesentlichen frei von Schmutzpartikeln. Jedwede weiteren Schmutzpartikel in den durch die Luftführungskanäle 25a, 25b strömenden Luftströmen werden aufgrund von jeweils zwei weiteren Umlenkungen abgeschieden, die jeweils stromabwärts des Prallelements 40 erfolgen. Die Strömungsrichtung des durch den Luftführungskanal 25a strömenden Luftstroms wird beispielsweise stromabwärts des Prallelements 40 durch die Ausgestaltung des vorderen Abschnitts 60a des Deckenelements 60 und dessen Anordnung relativ zum vorderen Abschnitt 50a des Zentralelements 50 und zum Prallelement 40 zweimal nahezu vollständig, d.h. um ca. 180 Grad, umgekehrt, und zwar zunächst in einer Rechtskurve und anschließend in einer Linkskurve. Wie oben bereits beschrieben, ist der Verlauf des Luftstroms entlang des Luftführungskanals 25b durch den hinteren Abschnitt 20b der Abscheidungseinheit 20 spiegelsymmetrisch zu dem vorstehend beschriebenen Verlauf des Luftstroms entlang des Luftführungskanals 25a durch den vorderen Abschnitt 20a der Abscheidungseinheit 20.

Das Deckenelement 60 besteht im Wesentlichen aus einem ebenen Zentralabschnitt 62 mit zwei an den seitlichen Rändern ansetzenden, in einem Winkel von ca. 70 Grad gegenüber der Horizontalen nach unten verlaufenden Seitenabschnitten, nämlich einem vorderen Seitenabschnitt 64a und einem hinteren Seitenabschnitt 64b des Deckenelements 60. Wie sich dies dem Querschnitt von Figur 4 entnehmen lässt, erfolgen jedwede Restabscheidungen von Schmutzpartikeln an den Stellen entlang des weiteren Verlaufs des Luftführungskanals 25a, an denen die größten Fliehkräfte wirken, nämlich an der Unterseite des ebenen Zentralabschnitts 62 und des in einem Winkel von ca. 70 Grad gegenüber der Horizontalen nach unten verlaufenden Seitenabschnitts 64a sowie an der Oberseite des entlang des Luftführungskanals 25a liegenden Teils des leicht gegenüber der Horizontalen nach unten verlaufenden zweiten ebenen Abschnitts 54a des vorderen Abschnitts 50a des Zentralelements 50. Weiter stromabwärts strömt der derart von Schmutzpartikeln gereinigte Luftstrom zu der Lüftereinheit 18, um schließlich im Umluftbetrieb oder im Abluftbetrieb abgeführt zu werden.

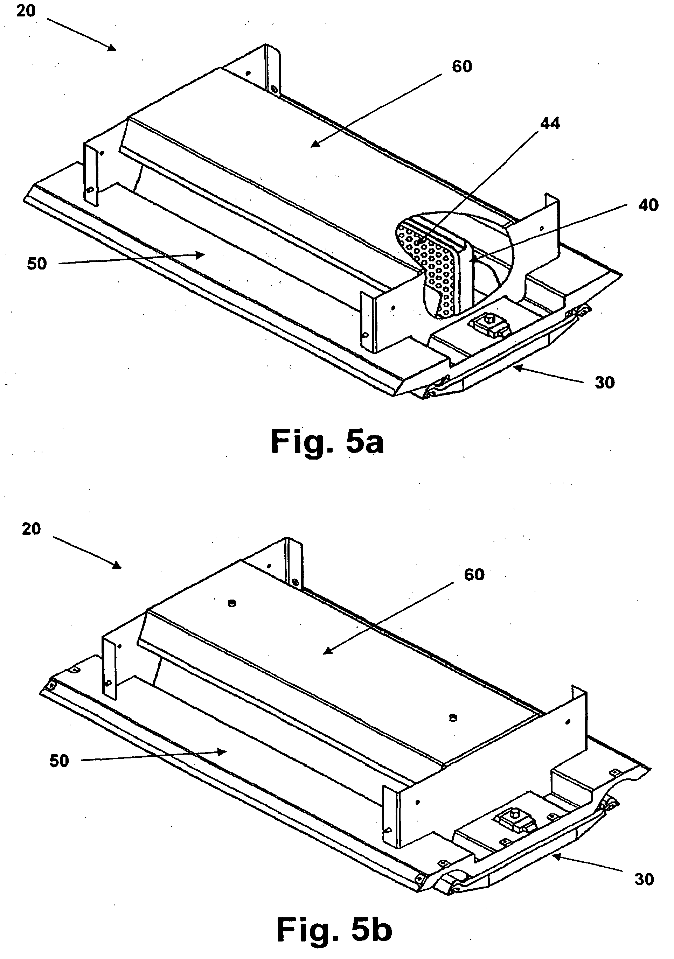

Vorzugsweise sind die einzelnen Elemente der Abscheidungseinheit 20, nämlich das Bodenelement 30, das Prallelement 40, das Zentralelement 50 und das Deckenelement 60, so innerhalb der Dunstabzugshaube 10 angebracht, dass diese Elemente für Reinigungszwecke ohne weiteres der Dunstabzugshaube 10 entnommen und in dieser wieder installiert werden können. Vorzugsweise bestehen das Bodenelement 30, das Prallelement 40, das Zentralelement 50 und das Deckenelement 60 aus einem spülmaschinenfesten Material, wie beispielsweise Edelstahl, so dass diese im Fall einer Verschmutzung ohne weiteres beispielsweise mittels einer Spülmaschine wieder gereinigt werden können, um die Abscheidungseffizienz der Abscheidungeinheit 20 wieder herzustellen. Insbesondere das am häufigsten zu reinigende Bodenelement 30 kann aus zwei ineinander gesteckten, teleskopartig relativ zueinander verschiebbaren Metallblechen bestehen, so dass die Länge des Bodenelements 30 ggf. an die Abmessungen einer Spülmaschine angepasst werden kann. Die Abscheidungseinheit 20 sowie deren Elemente können beispielsweise mittels reibschlüssigen Steckverbindungen und/oder Magneten in der Dunstabzugshaube 10 entfernbar angebracht sein, wie dies in den Figuren 5a und 5b angedeutet ist.

Wie dies oben ausführlich beschrieben worden ist, definiert die Abscheidungseinheit 20 der Dunstabzugshaube 10 gemäß der bevorzugten Ausführungsform der Erfindung zwei zu der Symmetrieachse B der Abscheidungseinheit 20 spiegelsymmetrische Luftführungskanäle 25a und 25b. Wie der Fachmann jedoch erkannt haben wird, verlaufen diese beiden Luftführungskanäle 25a und 25b nicht vollständig separat voneinander durch die Abscheidungseinheit 20. Denn insbesondere im Bereich des Prallelements 40 wechselwirken die durch die beiden Luftführungskanäle 25a und 25b strömenden Lüftströme auf vorteilhafte Art und Weise miteinander. Zum einen trägt die beiderseitige Beaufschlagung des Prallelements 40 bei geeigneter Wahl der Größe der Kapillarlöcher 44 dazu bei, dass die jeweiligen Luftströme nicht durch das Prallelement 40 hindurch treten. Zum anderen kann zwischen der V-förmig zulaufenden Vertiefung 38 in dem Zentralbereich 34 des Bodenelements 30 und dem dazu komplementär geformten bzw. gebogenen Verbindungsabschnitt 42 des Prallelements 40 bis zu einem gewissen Grad eine Lücke gelassen werden, da hier die Luftströme von beiden Seiten aufeinander treffen und somit das Nachströmen weiterer Abluft in diesen Bereich verhindern. Mit anderen Worten: für die jeweiligen Abluftströme ist diese Lücke zwischen der Vertiefung 38 in dem Zentralbereich 34 des Bodenelements 30 und dem dazu komplementär geformten Verbindungsabschnitt 42 des Prallelements 40 bis zu einem gewissen Grad quasi nicht vorhanden. Der Abstand zwischen der V-förmig zulaufenden Vertiefung 38 in dem Zentralbereich 34 des Bodenelements 30 und dem gebogenen Verbindungsabschnitt 42 des Prallelements 40 liegt vorzugsweise in einem Bereich von 2 bis 10 mm. Weiter bevorzugt beträgt der Abstand 5 mm.

Bei dem Bedienkopf 14 handelt es sich vorzugsweise um einen abnehmbaren Drehknopf, der ebenso wie die Elemente der Abscheidungseinheit 20 aus einem spülmaschinenfesten Material besteht. Der Bedienknopf 14 der bevorzugten Ausführungsform der Dunstabzugshaube 10 der Erfindung ermöglicht in Verbindung mit einer Steuereinheit sowohl die Ansteuerung der Lüftereinheit 18, beispielsweise die Einstellung unterschiedlicher Lüftungsstufen, als auch weiterer elektrischer Komponenten, wie beispielsweise einer Beleuchtung. Dabei erfolgt die Einstellung unterschiedlicher Lüftungsstufen vorzugsweise durch eine Drehbewegung des Bedienknopfs 14 und das Ein- bzw. Ausschalten der Beleuchtung durch eine Druckbetätigung des Bedienknopfs 14.

Die vorstehende gegenständliche Beschreibung der Erfindung dient nur Erläuterungszwecken. Die Erfindung ist keinesfalls auf das beschriebene Ausführungsbeispiel beschränkt, sondern kann von einem Fachmann auf eine ihm zweckmäßig erscheinende Weise an individuelle Betriebsanforderungen angepaßt werden, die möglicherweise von beschriebenen Betriebsbedingungen abweichen. Die erfindungsgemäße Dunstabzugshaube kann beispielsweise sowohl im industriellen bzw. gewerblichen Bereich als auch im nicht-gewerblichen Bereich vorteilhaft eingesetzt werden. Ferner wird der Fachmann erkennen, dass anstatt der hier beschrieben Symmetrie der Abscheidungseinheit hinsichtlich einer parallel zur Vorderseite der Dunstabzugshaube verlaufenden Ebene eine solche Symmetrie der Abscheidungseinheit alternativ oder zusätzlich hinsichtlich einer senkrecht zur Vorderseite der Dunstabzugshaube durch deren Mittelachse verlaufenden Ebene verwirklicht sein kann. Es ist ferner vorstellbar, dass die hierin beschriebene Abscheidungseinheit eine andere Geometrie aufweist, beispielsweise eine radialsymmetrische oder eine elliptische Geometrie. Wesentlich ist lediglich, dass durch die Abscheidungseinheit ein Luftführungskanal ausgebildet wird, entlang dem ein Prallelement angeordnet ist, das zumindest bereichsweise mit Kapillarlöchern versehen ist, über die an dem Prallelement abgeschiedene Schmutzpartikel abgeführt werden können.

Ferner wird der Fachmann erkennen, dass die hierin verwendeten Begriffe, wie "vorne" bzw. "hinten", "oben" bzw. "unten", "außen" bzw. "innen" und dergleichen, nicht dazu gedacht sind, die Orientierung der dadurch näher gekennzeichneten erfindungsgemäßen Elemente in irgendeiner Weise zu beschränken, sondern lediglich dazu dienen, diese Elemente von einander zu unterscheiden.

### Bezugszeichenliste:

- 10: Dunstabzugshaube
- 12: Vorderseite
- 14: Bedienknopf
- 16: oberes Ende der Dunstabzugshaube
- 18: Lüftereinheit
- 20: Abscheidungseinheit
- 20a: vorderer Abschnitt der Abscheidungseinheit
- 20b: hinterer Abschnitt der Abscheidungseinheit
- 22a: vordere Lufteinlassöffnung
- 22b: hintere Lufteinlassöffnung
- 25a: vorderer Luftführungskanal
- 25b: hinterer Luftführungskanal
- 30: Bodenelement
- 30a: vorderer Abschnitt des Bodenelements
- 30b: hinterer Abschnitt des Bodenelements
- 32a: vorderer Außenrand
- 32b: hinterer Außenrand
- 34: Zentralbereich
- 36a: vorderer wannenförmiger Abschnitt
- 36b: hinterer wannenförmiger Abschnitt
- 38: Vertiefung
- 40: Prallelement
- 40a: vorderer Abschnitt des Prallelements
- 40b: hinterer Abschnitt des Prallelements
- 42: Verbindungsabschnitt
- 44: Kapillarlöcher
- 50: Zentralelement
- 50a: vorderer Abschnitt des Zentralelements
- 50b: hinterer Abschnitt des Zentralelements
- 52a: erster Abschnitt des vorderen Abschnitts des Zentralelements
- 52b: erster Abschnitt des hinteren Abschnitts des Zentralelements
- 54a: zweiter Abschnitt des vorderen Abschnitts des Zentralelements
- 54b: zweiter Abschnitt des hinteren Abschnitts des Zentralelements
- 55a: dritter Abschnitt des vorderen Abschnitts des Zentralelements
- 55b: dritter Abschnitt des hinteren Abschnitts des Zentralelements
- 56a: vierter Abschnitt des vorderen Abschnitts des Zentralelements
- 56b: vierter Abschnitt des hinteren Abschnitts des Zentralelements
- 58a: fünfter Abschnitt des vorderen Abschnitts des Zentralelements
- 58b: fünfter Abschnitt des hinteren Abschnitts des Zentralelements
- 60: Deckenelement
- 60a: vorderer Abschnitt des Deckenelements
- 60b: hinterer Abschnitt des Deckenelements
- 62: Zentralabschnitt
- 64a: vorderer Seitenabschnitt des Deckenelements
- 64b: hinterer Seitenabschnitt des Deckenelements
- A: Schnittachse
- B: Symmetrieachse der Abscheidungseinheit

## Patentansprüche

1. Dunstabzugshaube (10) zum Abscheiden von Schmutzpartikeln und insbesondere Fett- und Öltröpfchen aus einem Luftstrom, umfassend:
eine Lüftereinheit (18) zur Erzeugung eines Abluftstroms durch die Dunstabzugshaube (10); und
eine Abscheidungseinheit (20) zur Abscheidung von Schmutzpartikeln aus dem Abluftstrom; wobei
die Abscheidungseinheit (20) wenigstens einen Luftführungskanal (25a, 25b) definiert, wobei entlang des wenigstens einen Luftführungskanals (25a, 25b) ein Prallelement (40) angeordnet ist, **dadurch gekennzeichnet, dass**
das Prallelement (40) zumindest bereichsweise Kapillarlöcher (44) aufweist, so dass aus dem entlang des wenigstens einen Luftführungskanals (25a, 25b) geführten Abluftstrom Schmutzpartikel über die Kapillarlöcher (44) abgeschieden werden, wobei das Prallelement (40) in dem wenigstens einen Luftführungskanal (25a, 25b) derart stromabwärts von einer Umlenkung des Ablenkungsstroms angeordnet ist, dass Schmutzpartikel aufgrund von Fliehkräften auf dem Prallelement (40) abgeschieden werden.

2. Dunstabzugshaube (10) nach Anspruch 1, wobei die Kapillarlöcher (44) einen Durchmesser in einem Bereich von ca. 0,5 bis 5 mm aufweisen.

3. Dunstabzugshaube (10) nach Anspruch 2, wobei die Kapillarlöcher (44) einen Durchmesser in einem Bereich von ca. 1 bis 3 mm aufweisen.

4. Dunstabzugshaube (10) nach Anspruch 1, wobei die Abscheidungseinheit (20) einen ersten Luftführungskanal (25a) und einen zweiten Luftführungskanal (25b) definiert, wobei der erste Luftführungskanal (25a) hinsichtlich einer Symmetrieebene der Abscheidungseinheit (20) spiegelsymmetrisch zu dem zweiten Luftführungskanal (25a) ausgebildet ist.

5. Dunstabzugshaube (10) nach Anspruch 4, wobei das Prallelement (40) sowohl entlang des ersten Luftführungskanals (25a) als auch entlang des zweiten Luftführungskanals (25b) ausgebildet ist.

6. Dunstabzugshaube (10) nach Anspruch 4 oder 5, wobei das Prallelement (40) einen ebenen vorderen Abschnitt (40a), einen ebenen hinteren Abschnitt (40b) und einen gebogenen Verbindungsabschnitt (42) aufweist, der den ebenen vorderen Abschnitt (40a) mit dem ebenen hinteren Abschnitt (40b) verbindet.

7. Dunstabzugshaube (10) nach Anspruch 6, wobei das Prallelement (40) ein U-förmiges Profil aufweist, wobei der ebene vordere Abschnitt (40a) im Wesentlichen parallel zu dem ebenen hinteren Abschnitt (40b) verläuft.

8. Dunstabzugshaube (10) nach Anspruch 6 oder 7, wobei sowohl der ebene vordere Abschnitt (40a) als auch der ebene hinteren Abschnitt (40b) des Prallelements mit Kapillarlöchern versehen sind.

9. Dunstabzugshaube (10) nach Anspruch 8, wobei die Abscheidungseinheit (20) ferner ein Bodenelement (30), ein Zentralelement (50) und ein Deckenelement (60) umfasst, die zusammen mit dem Prallelement (40) durch ihre Form und relative Anordnung zueinander den ersten Luftführungskanal (25a) und den zweiten Luftführungskanal (25b) definieren.

10. Dunstabzugshaube (10) nach Anspruch 9, wobei der erste Luftführungskanal (25a) und der zweite Luftführungskanal (25b) derart ausgestaltet sind, dass die Strömungsrichtung des über Lufteinlassöffnungen (22a, 22b) in die Abscheidungsvorrichtung (20) eintretenden Abluftstroms mehrmals derart umgelenkt wird, dass Schmutzpartikel abgeschieden werden.

11. Dunstabzugshaube (10) nach Anspruch 10, wobei das Prallelement (40) oberhalb des Bodenelements (30) derart angeordnet ist, dass zwischen dem gebogenen Verbindungsabschnitt (42) des Prallelements (40) und einer komplementär geformten Vertiefung (38) in einem Zentralbereich (34) des Bodenelements ein Abstand besteht.

12. Dunstabzugshaube (10) nach Anspruch 11, wobei der gebogene Verbindungsabschnitt (42) des Prallelements (40) derart ausgestaltet ist, dass sich auf der Innenseite des Verbindungsabschnitts (42) ansammelnde Schmutzpartikel auf die durch den Zentralbereich (34) des Bodenelements (30) definierte Vertiefung (38) abfließen können.

13. Dunstabzugshaube (10) nach Anspruch 9, wobei das Bodenelement (30), das Prallelement (40), das Zentralelement (50) und das Deckenelement (60) abnehmbar in der Abscheidungseinheit (20) angebracht sind.

14. Dunstabzugshaube (10) nach Anspruch 1, wobei die Dunstabzugshaube (10) ferner einen abnehmbaren Bedienknopf (14) aufweist, über den in Verbindung mit einer Steuereinheit die Leistung der Lüftereinheit und eine Beleuchtung der Dunstabzugshaube (10) angesteuert werden können.

## Claims

1. An extractor hood (10) for removing dirt particles, in particular fat and oil droplets, from an air flow, comprising:
a ventilator unit (18) for generating an exhaust air flow through the extractor hood (10); and
a separating means (20) for removing dirt particles from the exhaust air flow; wherein the separating means (20) defines at least one air guiding channel (25a, 25b), wherein along the at least one air guiding channel (25a, 25b) a baffle element (40) is arranged, **characterized in that**
the baffle element (40) has capillary holes (44) at least section-wise, such that dirt particles carried by the exhaust air flow guided along the at least one air channel (25a, 25b) are removed via the capillary holes (44), wherein in the at least one air guiding channel (25a, 25b) the baffle element (40) is arranged downstream of a deflection of the deflected flow, such that dirt particles, due to centrifugal forces, are deposited on the baffle element (40).

2. The extractor hood (10) according to claim 1, wherein the capillary holes (44) have a diameter of about 0.5 to 5 mm.

3. The extractor hood (10) according to claim 2, wherein the capillary holes (44) have a diameter of about 1 to 3 mm.

4. The extractor hood (10) according to claim 1, wherein the separating means (20) includes a first air guiding channel (25a) and a second air guiding channel (25b), wherein relative to a symmetry plane of the separating means (20), the first air guiding channel (25a) is a mirror image of the second air guiding channel (25a).

5. The extractor hood (10) according to claim 4, wherein the baffle element (40) is formed along both the first air guiding channel (25a) as well as the second air guiding channel (25b).

6. The extractor hood (10) according to claim 4 or 5, wherein the baffle element (40) has an even front section (40a), an even rear section (40b) and a curved connecting section (42) which connects the even front section (40a) with the even rear section (40b).

7. The extractor hood (10) according to claim 6, wherein the baffle element (40) has a U-shaped profile, wherein the even front section (40a) extends substantially in parallel to the even rear section (40b).

8. The extractor hood (10) according to claim 6 or 7, wherein both the even front section (40a) and the even rear section (40b) of the baffle element have capillary holes.

9. The extractor hood (10) according to claim 8, wherein the separating means (20) further comprises a bottom element (30), a central element (50) and a cover element (60), which together with the baffle element (40) by way of their shape and arrangement relative to each other, define the first air guiding channel (25a) and the second air guiding channel (25b).

10. The extractor hood (10) according to claim 9, wherein the first air guiding channel (25a) and the second air guiding channel (25b) are such designed that the flow direction of the exhaust air flow entering the separating means (20) via the air inlets (22a, 22b) is deflected several times so that dirt particles are removed.

11. The extractor hood (10) according to claim 10, wherein the baffle element (40) is arranged above the bottom element (30) such that a distance exists between the curved connecting portion (42) of the baffle element (40) and a complementarily shaped depression (38) in a central region (34) of the bottom element.

12. The extractor hood (10) according to claim 11, wherein the curved connecting portion (42) of the baffle element (40) is such designed that dirt particles accumulating on the inside of the connecting portion (42) are allowed to drain off onto the depression (38) defined by the central region (34) of the bottom element (30).

13. The extractor hood (10) according to claim 9, wherein the bottom element (30), the baffle element (40), the central element (50) and the cover element (60) are removably attached to the separating means (20).

14. The extractor hood (10) according to claim 1, wherein the extractor hood (10) further includes a removable operating button (14), by means of which in connection with a control unit, the power of the ventilator unit and a lightning of the extractor hood (10) can be controlled.

## Revendications

1. Hotte aspirante (10) servant à séparer les particules de saleté et, en particulier, les gouttelettes de graisse et d'huile d'un flux d'air, comprenant :
une unité de ventilation (18) destinée à générer un flux d'air d'évacuation par la hotte aspirante (10) et
une unité de séparation (20) destinée à séparer les particules de saleté du flux d'air, dans laquelle l'unité de séparation définit au moins un canal de guidage d'air (25a, 25b) et un élément d'impact (40) est disposé le long d'au moins un canal de guidage d'air (25a, 25b), **caractérisée en ce que**
ledit élément d'impact (40) présente au moins par endroits des trous capillaires (44) de telle sorte que les particules de saleté puissent être séparées du flux d'air évacué le long d'au moins un canal de guidage d'air (25a, 25b) par les trous capillaires (44), ledit élément d'impact (40) étant disposé dans le au moins un canal de guidage d'air (25a, 25b) en aval d'un coude de déviation du flux, de telle sorte que les particules de saleté sont séparées par des forces centrifuges produites sur l'élément d'impact (40).

2. Hotte aspirante (10) selon la revendication 1, **caractérisée en ce que** lesdits trous capillaires (44) ont un diamètre d'env. 0,5 à 5 mm.

3. Hotte aspirante (10) selon la revendication 2, **caractérisée en ce que** lesdits trous capillaires (44) ont un diamètre d'env. 1 à 3 mm.

4. Hotte aspirante (10) selon la revendication 1, **caractérisée en ce que** ladite unité de séparation (20) définit un premier canal de guidage d'air (25a) et un second canal de guidage d'air (25b) et le premier canal de guidage d'air (25a) est construit symétriquement en miroir par rapport au second canal de guidage d'air (25b) suivant un plan de symétrie de l'unité de séparation (20).

5. Hotte aspirante (10) selon la revendication 4, **caractérisée en ce que** ledit élément d'impact (40) est façonné à la fois le long du premier canal de guidage d'air (25a) et le long du second canal de guidage d'air (25b).

6. Hotte aspirante (10) selon la revendication 4 ou 5, **caractérisée en ce que** ledit élément d'impact comprend une partie avant plane (40a), une partie arrière plane (40b) et une partie de liaison courbée (42) qui relie la partie avant plane (40a) à la partie arrière plane (40b).

7. Hotte aspirante (10) selon la revendication 6, **caractérisée en ce que** ledit élément d'impact présente un profil en forme de U et la partie avant plane (40a) est essentiellement parallèle à la partie arrière plane (40b).

8. Hotte aspirante (10) selon la revendication 6 ou 7, **caractérisée en ce que** la partie avant plane (40a) et la partie arrière plane (40b) de l'élément d'impact sont pourvues toutes deux de trous capillaires.

9. Hotte aspirante (10) selon la revendication 8, **caractérisée en ce que** l'unité de séparation (20) comprend en plus un élément de fond (30), un élément central (50) et un élément de plafond (60, qui définissent conjointement avec l'élément d'impact (40), par leur forme et leur agencement l'un vis-à-vis de l'autre, le premier canal de guidage d'air (25a) et le second canal de guidage d'air (25b).

10. Hotte aspirante (10) selon la revendication 9, **caractérisée en ce que** ledit premier canal de guidage d'air (25a) et ledit second canal de guidage d'air (25b) sont conçus de telle sorte que le sens d'écoulement du flux d'air d'évacuation pénétrant dans le dispositif de séparation (20) via les orifices d'entrée d'air (22a, 22b) est dévié plusieurs fois de telle manière que les particules de saleté sont séparées.

11. Hotte aspirante (10) selon la revendication 10, **caractérisée en ce que** ledit élément d'impact (40) est disposé au-dessus de l'élément de fond (30) de sorte à définir un espace entre la partie de liaison courbée (42) du dit élément d'impact (40) et une gorge (38) de forme complémentaire dans une partie centrale (34) de l'élément de fond.

12. Hotte aspirante (10) selon la revendication 11, **caractérisée en ce que** ladite partie de liaison courbée (42) du dit élément d'impact (40) est façonnée de telle sorte que les particules de saleté qui s'accumulent sur le côté intérieur de la partie de liaison peuvent s'écouler sur la gorge (38) définie par la partie centrale (34) de l'élément de fond (30).

13. Hotte aspirante (10) selon la revendication 9, **caractérisée en ce que** l'élément de fond (30), l'élément d'impact (40), l'élément central (50) et l'élément de plafond (60) sont disposés de façon amovible dans l'unité de séparation (20).

14. Hotte aspirante (10) selon la revendication 1, qui comprend en outre un bouton de commande (14) amovible par lequel, en liaison avec une unité de commande, la puissance de l'unité de ventilation et un éclairage de la hotte aspirante (10) peuvent être commandés.
